# EUROPEAN PATENT APPLICATION

(11) **EP 3 301 976 A1**
(43) Date of publication of application: **04.04.2018**
(21) Application number: 17191717.2
(22) Date of filing: 18.09.2017
(51) Int. Cl.: H04W 48/00

(54) **COMMUNICATION DEVICE AND METHOD FOR USING A COMMUNICATION SERVICE**

(30) Priority: 29.09.2016 IN 201631033343
(71) Applicant: Intel IP Corporation, Santa Clara, CA 95054 (US)
(72) Inventor: CHAKRABORTY, Soumen, 562125 Bangalore, KA (IN)
(74) Representative: Viering, Jentschura & Partner mbB Patent- und Rechtsanwälte

(57) **Abstract**

A communication device is described comprising a transceiver, a plurality of subscriber identity modules and a controller configured to select a subscriber identity module from the plurality of subscriber identity modules for a communication service based on at least one of whether one or more of the subscriber identities modules have an ongoing communication connection and the result of a decision whether to select a subscriber identity module based on uplink condition and the uplink condition or the downlink condition depending on the result of the decision and configured to control the transceiver to use the communication service by means of the selected subscriber identity module.

## Description

### Technical Field

Embodiments described herein generally relate to communication devices and methods for using a communication service.

### Background

Modern communication terminals may include a plurality of subscriber identity modules (SIMs). Accordingly, a mobile originated communication service may be initiated by a mobile terminal using one of a plurality of subscriber identity modules and, accordingly, one of a plurality of communication networks or radio cells. Efficient approaches to select a subscriber identity module for a reliable and sustainable communication service are desirable.

### Brief Description of the Drawings

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
Figure 1 shows a communication arrangement.
Figure 2 shows a SIM selection screen.
Figure 3 shows a communication arrangement illustrating a DL-UL (downlink-uplink) balanced scenario.
Figure 4 shows a communication arrangement illustrating a DL-UL imbalance in a heterogeneous network scenario.
Figure 5 shows a diagram illustrating that terminal power consumption increases with increase of transmit power.
Figure 6 shows a SIM selection screen allowing a user to activate dynamic SIM selection.
Figure 7 shows a flow chart illustrating an example of a SIM selection procedure for a communication service to be established.
Figure 8 illustrates an example for a functional split between layers for the dynamic SIM selection.
Figure 9 shows a communication device.
Figure 10 shows a method for using a communication service.

### Description of Embodiments

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

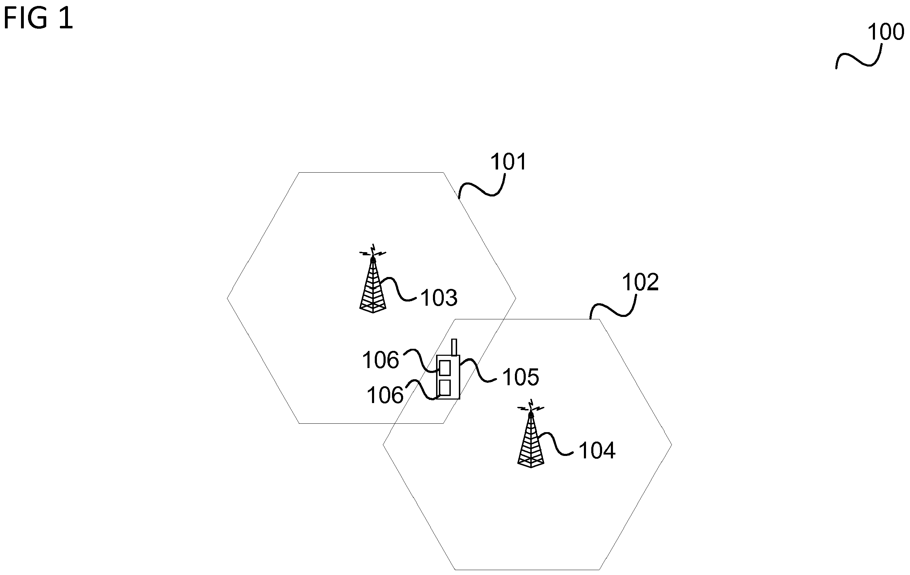

Figure 1 shows a communication arrangement 100.

The communication arrangement 100 includes a first radio cell 101 and a second radio cell 102. The first radio cell 101 is operated by a first base station 103 and the second radio cell 102 is operated by a second base station 104. The first base station 103 is for example part of a radio access network of a first mobile communication network and the second base station 104 is for example part of a radio access network of a second mobile communication network. It is assumed that the first mobile communication network and the second communication network are different mobile communication networks, e.g. are operated by different operators and/or require separate subscriptions. It should however be noted that the following may also be applied to the first mobile communication network and the second communication network are the same mobile communication network.

The first mobile communication network and the second mobile communication network each may for example be cellular mobile communication networks according to various standards. For example, the mobile communication network is a 2G, 3G, 4G or a 5G wireless communication system, e.g. according to GSM (Global System for Mobile Communications), GPRS (General Packet Radio Service), UMTS (Universal Mobile Telecommunications System), CDMA2000 or LTE.

The first radio cell 101 and the second radio cell 102 are assumed to overlap such that a mobile terminal 105 located in the overlap area of the first radio cell 101 and the second radio cell 102 can receive signals from both the first base station 103 and the second base station 104 and can use both the first communication network and the second communication network for communication.

For being able to use both the first communication system and the second communication system (or to use both the first communication system and the second communication system as home network to save costs, i.e. to avoid roaming costs), the mobile terminal 105 may include two (or more) subscriber identity modules (SIMs) 106, e.g. GSM SIMs or USIMs (Universal Subscriber Identity Modules). In other words, the mobile terminal 105 may be a multi-SIM device supporting communication via two (or more) different mobile communication networks. Each SIM corresponds to a subscription and the mobile terminal 105 may establish a communication connection for using a communication service to one of the communication systems using one of the SIMs and thus under one of its subscriptions (namely the one corresponding to the SIM used).

For example, there are currently many multi-SIM mobiles in market using either of the above wireless networks (LTE / 3G or 2G network). In a multi-SIM mobile, when a mobile-originated (MO) activity is initiated, the SIM chosen is typically a default SIM set by the user or the user is prompted to select a SIM prior to each MO activity.

For example, a multi-SIM device (e.g. a multi-SIM mobile) may offer the user to initially select a default SIM or choose a SIM each time while initiating a mobile originated (MO) activity such as a MO call or a MO SMS/MMS (short message service / multimedia message service) message transmission or a MO packet connection.

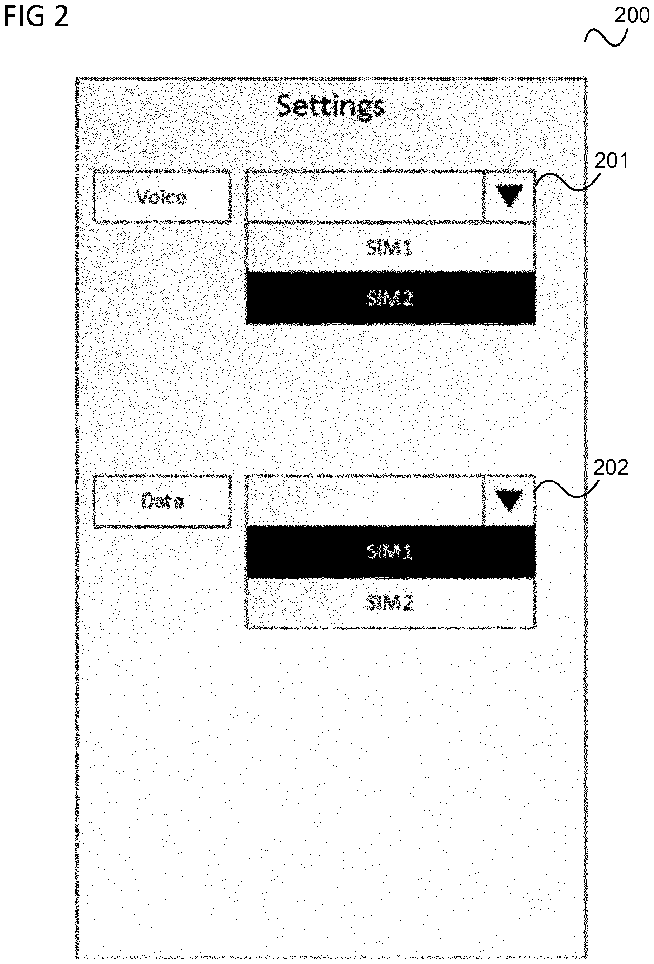

This is illustrated in figure 2.

Figure 2 shows a SIM selection screen 200.

The SIM selection screen 200 is for example displayed on a screen of the mobile terminal 105 when the user selects a corresponding configuration menu.

The SIM selection screen 200 includes a first drop-down menu 201 which allows the user to select the SIM to be used for voice calls and a second drop-down menu 202 which allows the user to select a SIM to be used for packet connections.

However, the user default selection may not be the optimal choice for a sustainable and reliable service.

For example, when the user starts a data or voice call in a multi SIM phone (e.g. corresponding to mobile terminal 105), the SIM 106 to be used for the call is chosen based on static priorities decided by the user or the user is given an option to select the SIM 106 just before the call is started and he makes the SIM selection based on tariff considerations. However, there are scenarios where the tariff plans on the SIMs 106 are not very different (i.e. the costs for usage of communication services provided by the communication systems 101, 102 are similar) or the mobile terminal is battery limited or coverage limited and it may rather be desirable that the user benefits from selection of SIM based on UE's power and performance criteria.

Accordingly, according to various examples, an approach for a dynamically selection of a SIM is provided to optimize performance and mobile terminal's power consumption across different scenarios by considering one or more of :
- The current radio resource control (RRC) state of the SIMs (i.e. RRC connected or RRC idle).
- The mobile terminal's pending battery life. The mobile terminal may be battery-power limited, meaning that the battery life is below a certain percentage, e.g. 20%.
- The mobile terminal's transmit power limitations (the mobile terminal is for example power limited for a SIM if for the SIM the path loss is greater than a predetermined threshold).
- The traffic type of the new call: DL (downlink) heavy or UL (uplink) heavy. DL heavy means the traffic in DL is much more than traffic in UL, for example a file download. UL heavy means the traffic in UL is much more than traffic in DL, for example a file upload. A VoIP/Voice call may for example be balanced in DL and UL, i.e. neither DL heavy nor UL heavy). According to the traffic type, DL and UL channel conditions for the SIMs may be considered (also considering for example considering Hetnet (Heterogeneous Network) scenarios where there can be DL/UL imbalance).

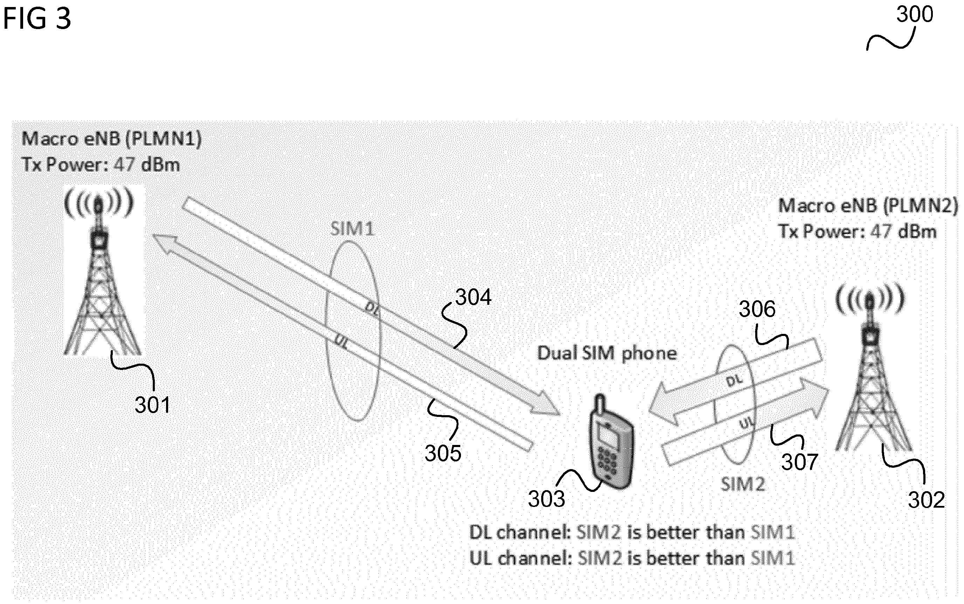

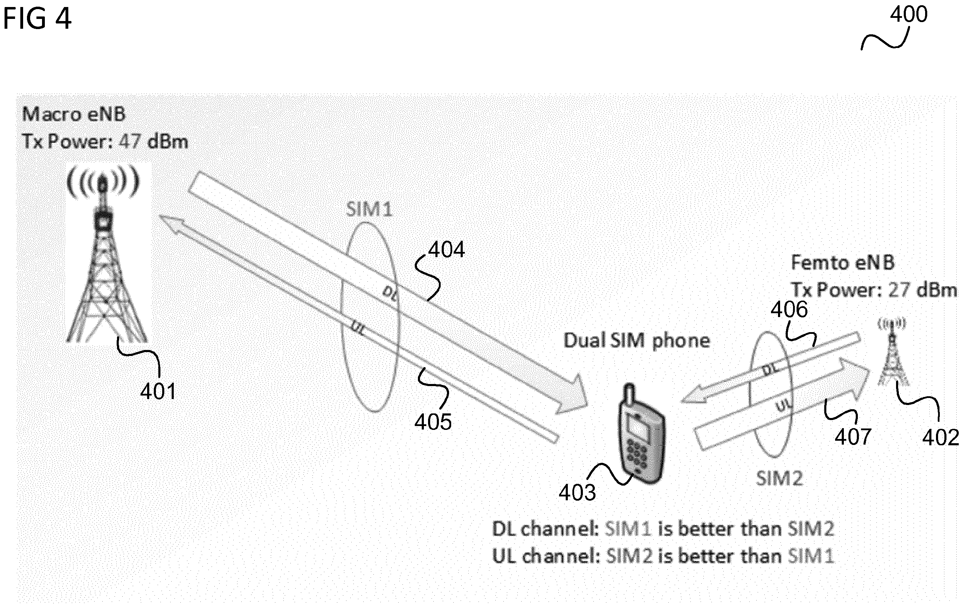

In a multi-SIM scenario where a mobile terminal 105, e.g. a UE, for example includes two SIM 106, the two SIMs 106 of the UE can, as illustrated in figure 1, be connected to two different cells from two different operators. And as shown in figure 3 and figure 4 below, the conditions for the Downlink (DL) channels and the Uplink (UL) channels between the UE and the base station (e.g. eNB) can be different for one SIM compared to the other SIM, for example. A (communication) channel (DL or UL) for a SIM or of a SIM can be understood as a channel established via the SIM or using the SIM, e.g. under the subscription represented by the SIM and using a corresponding identification associated with the SIM (e.g. the IMSI) and the subscription it represents.

Figure 3 shows a communication arrangement 300 illustrating a DL-UL balanced scenario.

The communication arrangement 300 includes a first base station 301, a second base station 302 and a mobile terminal 303, wherein the mobile terminal 303 has a first DL channel 304 and a first UL channel 305 to the first base station 301 via a first SIM (SIM1) of the mobile terminal 301 and the mobile terminal 303 has a second DL channel 306 and a second UL channel 307 to the second base station 302 via a second SIM (SIM2) of the mobile terminal 301.

In this scenario, the second DL channel 306 is better than the first DL channel 304 and the second UL channel 305 is better than the first UL channel 307, i.e. the DL channel and the UL channel for one of the SIM cards (SIM2) are better than for the other (SIM1). A "better" (or higher quality) channel may for example mean a higher reception power at the respective receiver or a lower path loss. In the example of figure 3, the difference of channel qualities may occur since the mobile terminal 303 is located nearer to the second base station 302 and the base stations 301, 302 have the same transmission power.

Figure 4 shows a communication arrangement 400 illustrating a DL-UL imbalance in a Hetnet scenario.

A Hetnet scenario or deployment is when different types of base stations are deployed together. Different basestations are macro base stations, pico or femto base stations, relay nodes and these base stations can have different transmit power.

In the example of figure 4, the communication arrangement 400 includes a first base station 401 (which is a macro base station), a second base station 402 (which is a femto base station) and a mobile terminal 403, wherein the mobile terminal 403 has a first DL channel 404 and a first UL channel 405 to the first base station 401 via a first SIM (SIM1) of the mobile terminal 401 and the mobile terminal 403 has a second DL channel 406 and a second UL channel 407 to the second base station 402 via a second SIM (SIM2) of the mobile terminal 401.

In this scenario, the first DL channel 404 is better than the second DL channel 406 and the second UL channel 407 is better than the first UL channel 405, i.e. the DL channel for the first SIM (SIM1) is better than the one for the second SIM (SIM2), but the UL channel of the second SIM (SIM2) is better than the one of the first SIM (SIM1).

This may be the case since the mobile terminal 403 is located nearer to the second base station 302 but the first base station 401 has a higher transmission power (e.g. since the second base station 402 is a weaker base station, e.g. a home eNB). For example the second SIM is connected via a small cell (25- 27 dBm Tx power) and the first SIM is connected to via a macro cell (∼43 dBm Tx power) and the DL Tx powers are very different.

In the following, for a UE 105 having two SIMs 106, approaches for a dynamic SIM selection for a UE initiated voice or data call are described which may allow reducing the UE's power consumption and improving its downlink and uplink performance.

According to various approaches, if allowed by the user (e.g. by not choosing to use fixed SIM selection for all scenarios in the user settings of the UE), the UE selects a SIM for an UE initiated voice or data call based on one or more of the following:
- If the DL and UL channels are similar (i.e. have similar quality, e.g. reception power or similar signal to noise ratio on both downlink and uplink) for both SIMs, select a SIM that is already in RRC Connected state (if there is one) instead of changing the RRC state of another SIM from Idle to Connected: If one SIM is in RRC idle state and the other SIM is already in RRC connected state (or generally a connected state of the network layer according to the OSI/ISO reference model), selection of the connected SIM for a new call is more power optimal in certain scenarios because a transition from RRC Idle to RRC Connected consumes time and power. Further, when both SIMs are active (i.e. in RRC connected state), the power consumption is higher because of duplication of control layer overhead and unsynchronized eNB scheduling.
- Separate evaluation of DL and UL channel on both SIMs, as in Hetnet scenarios it is not guaranteed that the SIM with a better DL channel will also have a better UL channel as illustrated in figure 4.
- SIM with better UL channel (e.g. lower pathloss) is better for UE's power consumption and UL performance: Power consumption at the UE increases with an increase in the UE's transmit power. So by selecting the SIM with better UL channel for UL heavy traffic, the UE's power consumption can also be brought down along with improving UL performance.
- Based on the traffic type (DL heavy/UL heavy) the SIM with better DL/UL can be selected: There are scenarios where UL is better for one SIM and DL is better for another SIM (as in the example of figure 4), hence matching the traffic type with DL/UL channel condition may perform better for the UE and the system than always having a static SIM selection.

An approach based on one or more of the above and further described in the following may for example be applied in one or more of the following scenarios:
- In the common scenario in emerging markets where dual SIM (or even triple SIM) is popular due to non-overlapping coverages (and coverage holes) from different operators. So the UL and DL channels conditions may be very different for the two (or more) SIMs.
- In Hetnet deployments, where UL channel of one SIM is better whereas DL channel is better for the other SIM (as shown in figure 4).
- When the tariff plan of the two SIMs are not very different and user is thus not very inclined to have static SIM selection based on tariff.
- When the UE battery power is low and user would prefer a power optimal SIM selection logic (rather than cost optimizing)
- When the UE is transmission (Tx) power limited. When the UE is Tx power limited, by sending the UL heavy traffic over the SIM that has better UL channel helps to have low overall power consumption.

An approach based on one or more of the above and further described in the following may allow achieving
- An improvement in the UE's Battery life:
   ∘ By mapping UL heavy traffic to the SIM with the better UL channel.
   ∘ By avoiding RRC connected mode on two SIMs simultaneously whenever possible, by starting the new call on the SIM that is already connected instead of changing RRC state of the other SIM from RRC Idle to RRC Connected.
- An Improvement in DL and UL performance
   ∘ By mapping DL heavy traffic to the SIM with the better DL channel.
   ∘ By mapping UL heavy traffic to the SIM with the better UL channel.
   ∘ By avoiding RRC connected mode on two SIMs simultaneously whenever possible, by starting the new call on the SIM that is already connected instead of changing RRC state of the other SIM from RRC Idle to RRC Connected.

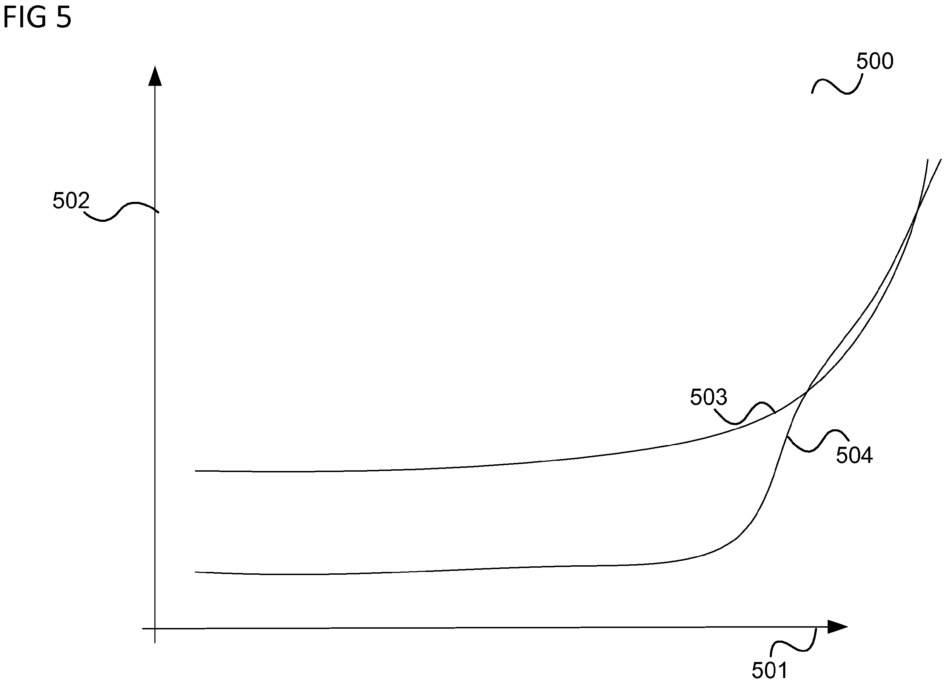

Figure 5 shows a diagram 500 illustrating that UE power consumption increases with increase of transmit power.

The power consumption, increasing in the direction of the vertical axis 501, is shown as a function of transmit power, increasing in the direction of the horizontal axis 502 in two curves 503, 504 according to the behavior of two exemplary UEs shown in a qualitative manner.

The behavior illustrated in figure 5 is an example of a typical dependency of power consumption of multimode UEs on Tx power. For example, power consumption almost doubles when the UE transmit power increases from 0dBm to 15dBm.

Since UE power consumption increases with increase of transmit power the SIM that requires lower Tx power may be selected to decrease in UE's power consumption for UL heavy traffic or when the UE is power limited.

So for a UE with critical battery life, a selection of SIM based on UL channel (hence lower transmit power) to extend battery life may be performed.

When the RRC state of one SIM is connected (e.g. for a voice call) and the user initiates a data call, the SIM that is used for voice call can be used for the data call. This may allow achieving
- Latency reduction: Faster call setup as the SIM is already connected.
- Reduction of power consumption: Having both the SIMs in connected state is more expensive in terms of power consumption compared to having high data rate on one SIM and having the other SIM in RRC Idle. As for multi-SIM active operations, eNB configurations are typically not synchronized. Also there is duplication of control layer overhead when both the SIMs are in RRC Connected.
- Performance improvement in UL: As scheduling in two SIMs are typically not coordinated in multi-SIM active operations, in Tx (transmission) power limited scenarios, the UL performance may degrade when there are simultaneous transmissions in both the SIMs. This may be avoided by using the same SIM for both a voice call and a data call.

Regarding DL and UL improvements, it should be noted that selecting the SIM with the better UL channel allows transmitting lower power on one SIM and higher allowed transmit power for the other SIM. This helps in UL performance for transmit power limited (high path loss) UEs.

If the traffic is UL heavy (e.g. this means that there is more data to be transmitted in uplink than in downlink of the respective service, e.g. a file upload and e.g. only ACK/NACKs (acknowledgements, negative acknowledgements) in downlink), the UL performance improves if the SIM with the better UL channel is selected.

If the traffic is DL heavy (e.g. this means that there is more data to be received in downlink, e.g. a file download and e.g. only ACK/NACKs in UL), the DL performance improves if the SIM with better DL channel is selected.

In the following, embodiments are described in more detail.

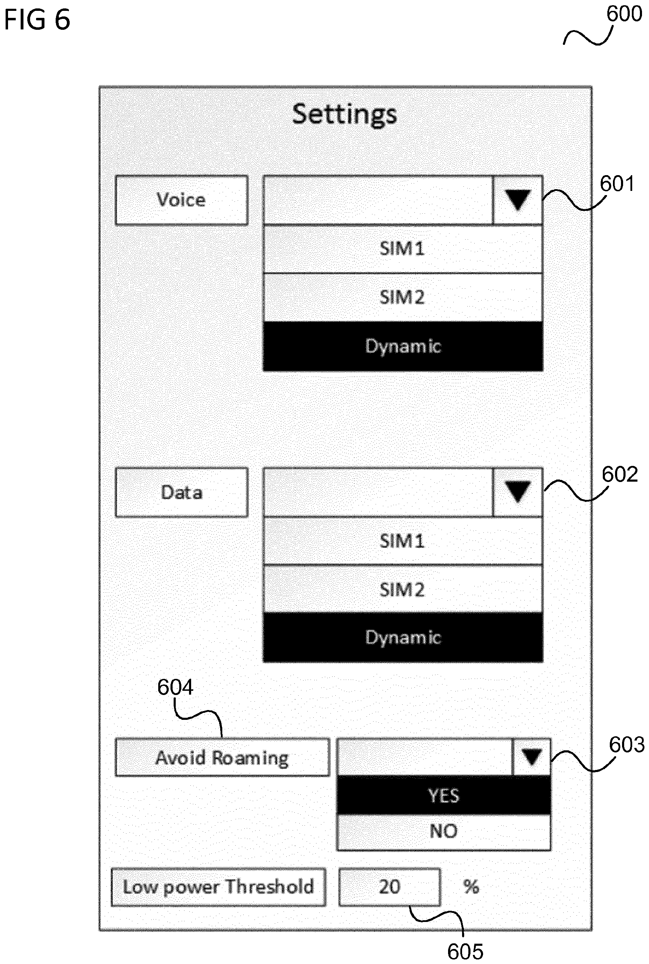

Figure 6 shows a SIM selection screen 600 allowing a user to activate dynamic SIM selection.

The SIM selection screen 600 is for example displayed on a screen of the mobile terminal 105, e.g. a UE, when the user selects a corresponding configuration or user setting menu.

In contrast to a multi-SIM phone with a SIM selection screen as shown in figure 2, where the user has an option to decide static priorities (in the phone settings) for voice and data call, i.e. can select SIM1 or SIM2, in the selection screen 600 the user can choose a static priority between SIM1/SIM2 or can select the "dynamic" option for voice calls using a first drop-down menu 601 and for data calls using a second drop-down menu 602. Additionally, the user can select an "Avoid Roaming" flag in a third drop-down menu 603 to ensure that avoiding roaming charges will be given more importance compared to dynamic SIM selection that might be better for the UE's power consumption or performance.

The user may further select an "avoid roaming" option using a corresponding button 604. For example, when one of the SIMs is roaming, and the avoid roaming option is selected, for all UE initiated voice or data calls the roaming SIM is avoided unless there is no coverage for the other SIM or the UE is battery power limited (e.g. when the charging level is below a predetermined low power threshold or battery charging threshold)

The user may input a low power threshold via an input field 605 to the dynamic SIM selection algorithm used when the SIM selection is set to dynamic. The low power threshold is to define a battery (charging) level below which the UE power consumption should be given higher priority compared to UL/DL performance/roaming charges in the dynamic SIM selection decision.

It should be noted that the dynamic SIM selection logic as described below may also be used with other user interfaces than the one of figure 6. For example the trigger to do "dynamic" selection can be a default battery threshold and a user can be prompted to use a particular SIM based dynamic selection whenever a call is started.

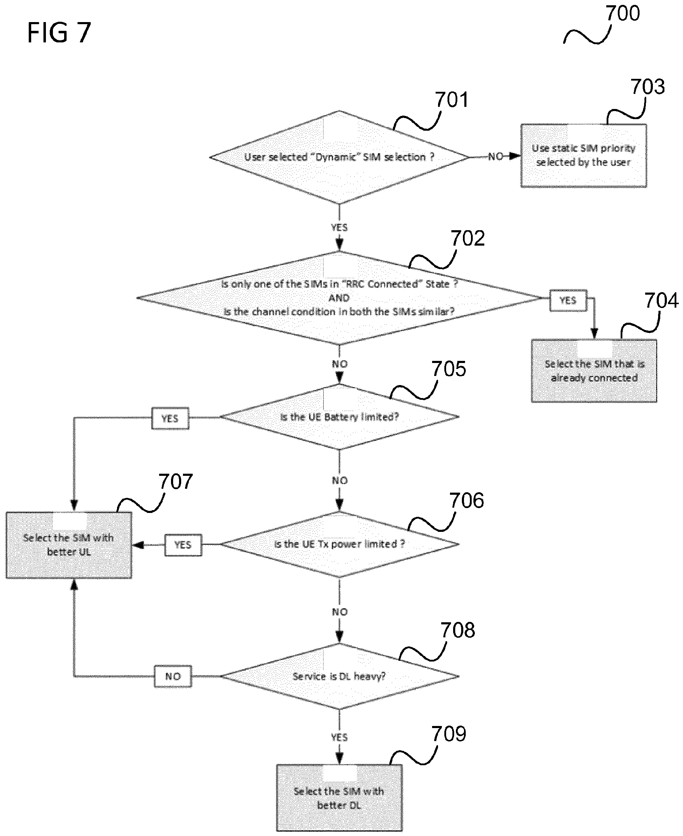

Figure 7 shows a flow chart 700 illustrating an example of a SIM selection procedure for a communication service to be established (e.g. a call). This may for example be carried out by a corresponding controller in the UE.

In 701, it is checked whether the user has selected dynamic SIM selection. If this is the case, the procedure continues with 702. Else, the static SIM priority selected by the user is used for SIM selection in 703 and the SIM selection procedure ends.

In 702, it is checked whether only one of the SIMs is in RRC connected state (i.e. not both are in RRC Idle or not both are in RRC connected) and DL channel conditions and the UL channel conditions are similar, i.e. not too different (e.g. in terms of a comparison of RSRPs/SNRs for the DL channels and path loss for the UL channels). If this is the case, the connected SIM is selected in 704 and the SIM selection procedure ends. Else, the procedure continues with 705.

In 705, it is checked whether the UE is battery limited based on a default threshold (or a threshold set by the user) specifying a percentage of battery life remaining. If this is the case the SIM with better UL is selected in 707 since a better UL channel implies lower transmit power and hence lower power consumption (as illustrated in figure 5) and the SIM selection procedure ends. Else, the procedure continues with 706.

In 706, it is checked whether the UE is transmit power limited. The UE is for example considered as transmit power limited if any of the SIMs has path loss greater than a predetermined threshold. If this is the case the SIM with better UL is selected in 707 and the SIM selection procedure ends. Else, the procedure continues with 708.

In 708, it is checked whether the communication service is DL heavy. If the communication service is not DL heavy, the SIM with better UL is selected in 707 and the SIM selection procedure ends. Else, the SIM with the better DL channel is selected in 709 and the SIM selection procedure ends.

The UE can determine the better DL channel of two DL channels for example based on SNR (signal-to-noise ratio) or the (reference signal received power) of the respective received signals. The UE can determine the better UL channel based on the path loss of the UL channels. It should be noted that since the base station transmit powers can be different, a DL channel of one SIM being better than the DL channel of the other SIM does not imply that the UL channel of the SIM is also better than the UL channel of the other SIM (as illustrated in figure 4).

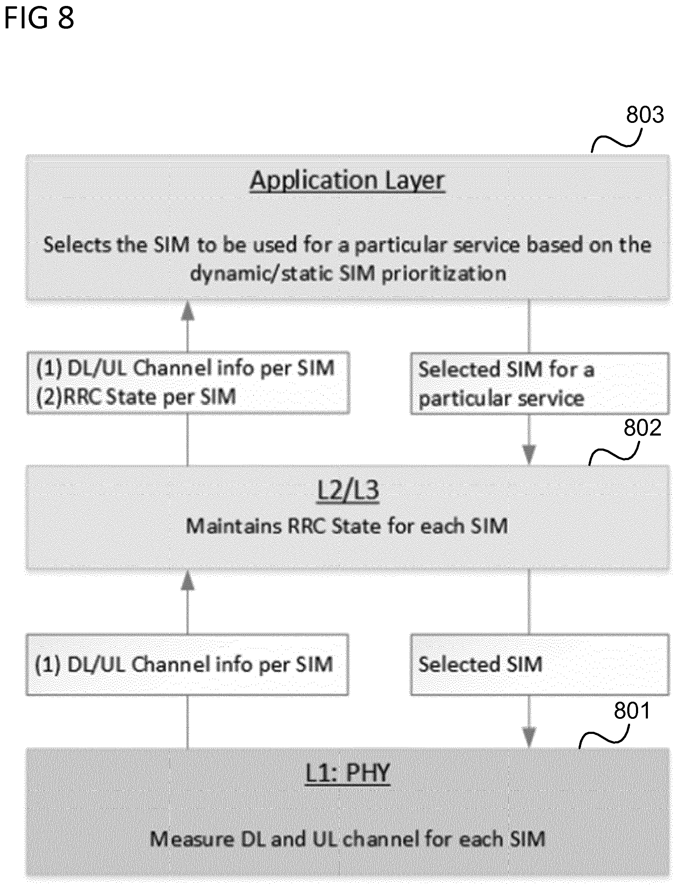

Figure 8 illustrates an example for a functional split between layers for the dynamic SIM selection.

The physical layer 801 of the UE measures the DL channel and the UL channel quality for each SIM. And provides corresponding DL/UL channel information per SIM to L2/L3 layer 802. In this representation, layer 2 and layer 3 are combined into the L2/L3 layer 802. The L2/L3 layer 802 has knowledge about the RRC state for each SIM and provides the DL/UL channel information per SIM as well as the RRC state per SIM to the application layer 803.

The application layer 803 selects the SIM to be used for a particular communication service based on the SIM selection procedure as for example illustrated in figure 7 and indicates the selected SIM for the communication service to the L2/L3 layer 802 which in turn controls the physical layer to establish the communication service in accordance with the selected SIM.

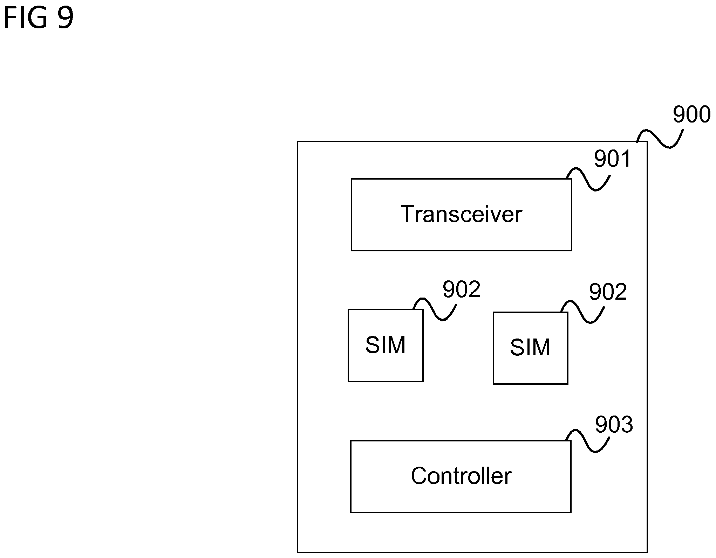

In summary, according to various examples, a communication device is provided as illustrated in figure 9.

Figure 9 shows a communication device 900.

The communication device 900 includes a transceiver 901 and a plurality of subscriber identity modules 902.

The communication device 900 further includes a controller 903 configured to select a subscriber identity module from the plurality of subscriber identity modules for a communication service based on at least one of whether one or more of the subscriber identities modules have an ongoing communication connection and the result of a decision whether to select a subscriber identity module based on uplink condition and the uplink condition or the downlink condition depending on the result of the decision.

The controller 903 is further configured to control the transceiver 901 to use the communication service by means of the selected subscriber identity module.

According to various examples, a communication device (e.g. a communication terminal such a mobile phone or a UE) including two (or more) subscriber identity modules determines which subscriber identity module (SIM) it uses for a communication service to be established based on one of or a combination of the following criteria:
1) whether one of the SIMs already has an established communication connection
2) whether UL or DL condition should be the basis of the selection and, correspondingly, UL and DL condition of the two (or more) SIMs. UL and DL condition may refer to the UL and DL radio conditions, e.g. the communication performance, respectively, or the quality of an UL channel or DL channel, respectively, as defined above (i.e. whether a channel is "better" or not as described above).

A subscriber identity module having an ongoing communication connection may for example mean that the subscriber identity module is in an RRC (Radio Resource Control) connected state, i.e. has an RRC connection.

The determination (or in other words the SIM selection) based on a combination of both criteria may for example include checking the criteria successively as explained with reference to figure 7.

For example, the communication device including two SIM cards (or possibly also more than two SIM cards) may perform a dynamic SIM selection for a new call, e.g. a mobile (e.g. UE) initiated voice or data call, based on one or more of the following:
- Consider the current RRC state (idle or connected) of both the SIM cards to decide if the already RRC connected SIM can be used for the new call or the idle SIM should be moved to RRC connected.
   ∘ e.g. only when channel condition seen in both the SIMs are similar;
   ∘ or the UE is battery limited and single SIM active is preferred over dual active.
- For battery-power limited UEs or transmit power limited UEs, select the SIM that results in lower cumulative transmit power and hence lower battery power consumption and better UL performance.
- Matching the traffic type (DL heavy/UL heavy) of a UE initiated service with the channel condition seen in the two SIMs:
   ∘ A DL heavy service is mapped to the SIM with better DL channel;
   ∘ A UL heavy service is mapped to the SIM with better UL channel;
   This is especially beneficial when the DL channel and the UL channel are not both better for one of the SIMs in a Hetnet scenario (as in the example of figure 4).

The communication device is for example a mobile terminal (e.g. a UE) having overlapping coverage of two radio cells. However, it may also be operated in a scenario where it does not have overlapping coverage from two cells. For example, if a dynamic SIM selection is enabled for the mobile terminal, if there is no coverage from one of the cells, the voice and data call can be placed via the other cell irrespective of tariff plan.

The components of the communication device (e.g. the transceiver, the subscriber identity modules and the controller) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions which will be described in more detail below may also be understood as a "circuit".

The transceiver may include RF (radio frequency) components, e.g. an RF front end, as well as higher layer components, e.g. modem components such as a modem instance for each of the subscriber identity module, including a protocol stack corresponding to one or more radio access technologies supported by the SIM.

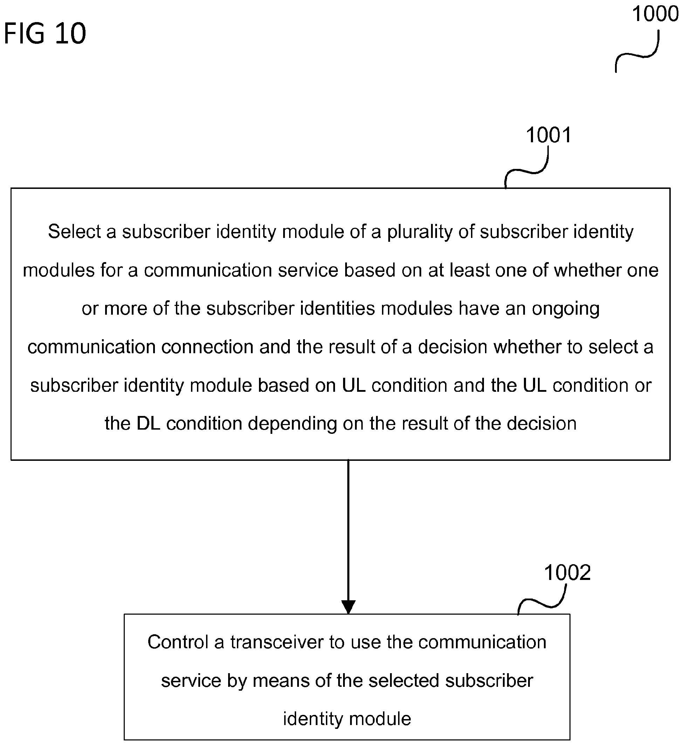

The communication device 900 for example carries out a method as illustrated in figure 10.

Figure 10 shows a method for using a communication service, for example carried out by a communication device.

In 1001, the communication device selects a subscriber identity module of a plurality of subscriber identity modules for a communication service based on at least one of whether one or more of the subscriber identities modules have an ongoing communication connection and the result of a decision whether to select a subscriber identity module based on uplink condition and the UL condition or the DL condition depending on the result of the decision

In the 1002, the communication device controls a transceiver to use the communication service by means of the selected subscriber identity module.

The following examples pertain to further embodiments.

Example 1 is a communication device as illustrated in figure 9.

In Example 2, the subject-matter of Example 1 may optionally include a determiner configured to decide whether to select a subscriber identity module based on uplink condition.

In Example 3, the subject-matter of Example 2 may optionally include the determiner being configured to decide to select a subscriber identity module based on uplink condition if a charging level of a battery of the communication device is beneath a predetermined battery charging threshold.

In Example 4, the subject-matter of Example 3 may optionally include an input configured to receive an input specifying the battery charging threshold and to provide the battery charging threshold to the determiner.

In Example 5, the subject-matter of any one of Examples 2-4 may optionally include the determiner being configured to decide to select a subscriber identity module based on uplink condition if a transmit power required to use the communication service for any of the subscriber identity modules is above a predetermined transmit power threshold.

In Example 6, the subject-matter of Example 5 may optionally include the predetermined transmit power threshold being a percentage of a maximum allowed transmit power.

In Example 7, the subject-matter of any one of Examples 2-6 may optionally include the determiner being configured to decide to select a subscriber identity module based on uplink condition if the path loss of any of the subscriber identity modules is above a predetermined pathloss threshold.

In Example 8, the subject-matter of any one of Examples 2-7 may optionally include the determiner being configured to decide whether to select a subscriber identity module based on uplink condition based on whether the communication service has more traffic in uplink than in downlink.

In Example 9, the subject-matter of any one of Examples 1-8 may optionally include the communication service being a call to be established.

In Example 10, the subject-matter of any one of Examples 1-9 may optionally include the controller being configured to determine whether a subscriber identity module of the plurality of subscriber identity modules already has an ongoing communication connection and to select a subscriber identity module already having an ongoing communication connection if there is any among the plurality of subscriber identity modules.

In Example 11, the subject-matter of any one of Examples 1-10 may optionally include the controller being configured to determine whether a subscriber identity module already has an ongoing communication connection by determining whether the subscriber identity module being in a connected state.

In Example 12, the subject-matter of Example 11 may optionally include the connected state being a network layer connected state.

In Example 13, the subject-matter of any one of Examples 1-12 may optionally include the ongoing communication connection being a connection according to a first connectivity type and the communication service being to be established according to a second connectivity type.

In Example 14, the subject-matter of Example 13 may optionally include the first connectivity type being circuit-switched and the second connectivity type being packet-switched or the second connectivity type being circuit-switched and the first connectivity type being packet-switched.

In Example 15, the subject-matter of any one of Examples 1-14 may optionally include the controller being configured to select a subscriber identity module based whether one or more of the subscriber identities modules have an ongoing communication connection if channel conditions of the subscriber identity modules are similar in terms of a predetermined similarity criterion.

In Example 16, the subject-matter of Example 15 may optionally include the predetermined similarity criterion being that measures of the communication performances of the subscriber identity modules are within a predetermined range.

In Example 17, the subject-matter of any one of Examples 1-16 may optionally include the communication performance being a reception quality of signals received via a communication channel of the respective SIM at the communication device.

Example 18 is a method for using a communication service as illustrated in figure 10.

In Example 19, the subject-matter of Example 18 may optionally include deciding whether to select a subscriber identity module based on uplink condition.

In Example 20, the subject-matter of Example 19 may optionally include deciding to select a subscriber identity module based on uplink condition if a charging level of a battery of a communication device including the transceiver is beneath a predetermined battery charging threshold.

In Example 21, the subject-matter of Example 20 may optionally include receiving an input specifying the battery charging threshold.

In Example 22, the subject-matter of any one of Examples 19-21 may optionally include deciding to select a subscriber identity module based on uplink condition if a transmit power required to use the communication service for any of the subscriber identity modules is above a predetermined transmit power threshold.

In Example 23, the subject-matter of any one of Examples 22 may optionally include the predetermined transmit power threshold being a percentage of a maximum allowed transmit power.

In Example 24, the subject-matter of any one of Examples 19-23 may optionally include deciding to select a subscriber identity module based on uplink condition if the path loss of any of the subscriber identity modules is above a predetermined pathloss threshold.

In Example 25, the subject-matter of any one of Examples 19-24 may optionally include deciding whether to select a subscriber identity module based on uplink condition based on whether the communication service has more traffic in uplink than in downlink.

In Example 26, the subject-matter of any one of Examples 18-25 may optionally include the communication service being a call to be established.

In Example 27, the subject-matter of any one of Examples 18-26 may optionally include determining whether a subscriber identity module of the plurality of subscriber identity modules already has an ongoing communication connection and selecting a subscriber identity module already having an ongoing communication connection if there is any among the plurality of subscriber identity modules.

In Example 28, the subject-matter of any one of Examples 18-27 may optionally include determining whether a subscriber identity module already has an ongoing communication connection by determining whether the subscriber identity module being in a connected state.

In Example 29, the subject-matter of Example 28 may optionally include the connected state being a network layer connected state.

In Example 30, the subject-matter of any one of Examples 18-29 may optionally include the ongoing communication connection being a connection according to a first connectivity type and the communication service being to be established according to a second connectivity type.

In Example 31, the subject-matter of Example 30 may optionally include the first connectivity type being circuit-switched and the second connectivity type being packet-switched or the second connectivity type being circuit-switched and the first connectivity type being packet-switched.

In Example 32, the subject-matter of any one of Examples 18-31 may optionally include selecting a subscriber identity module based whether one or more of the subscriber identities modules have an ongoing communication connection if channel conditions of the subscriber identity modules are similar in terms of a predetermined similarity criterion.

In Example 33, the subject-matter of Example 32 may optionally include the predetermined similarity criterion being that measures of the communication performances of the subscriber identity modules are within a predetermined range.

In Example 34, the subject-matter of any one of Examples 18-33 may optionally include the communication performance being a reception quality of signals received via a communication channel of the respective SIM at the communication device.

According to a further example, a communication device is provided including a transceiver, a first subscriber identity module and a second subscriber identity module and at least one of a first determiner configured to determine whether the communication device has a communication connection over the first subscriber identity module or the second subscriber identity module and a second determiner configured to determine whether uplink performance or downlink performance is more important for a communication service to be used and further including a controller configured to select the first subscriber identity module or the second subscriber identity module for using the communication service based on a determination result of the first determiner or a determination result of the second determiner or both and to control the transceiver according to the selection.

It should be noted that one or more of the features of any of the examples above may be combined with any one of the other examples.

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A communication device comprising:
a transceiver;
a plurality of subscriber identity modules; and
a controller
configured to select a subscriber identity module from the plurality of subscriber identity modules for a communication service based on at least one of
• whether one or more of the subscriber identities modules have an ongoing communication connection, and
• a result of a decision whether to select a subscriber identity module based on an uplink condition, and the uplink condition or a downlink condition depending on the result of the decision; and
configured to control the transceiver to use the communication service by means of the selected subscriber identity module.

2. The communication device of claim 1, comprising a determiner configured to decide whether to select a subscriber identity module based on uplink condition.

3. The communication device of claim 2, wherein the determiner is configured to decide to select a subscriber identity module based on uplink condition if a charging level of a battery of the communication device is beneath a predetermined battery charging threshold.

4. The communication device of claim 3, comprising an input configured to receive an input specifying the battery charging threshold and to provide the battery charging threshold to the determiner.

5. The communication device of any one of claims 2 to 4, wherein the determiner is configured to decide to select a subscriber identity module based on uplink condition if a transmit power required to use the communication service for any of the subscriber identity modules is above a predetermined transmit power threshold.

6. The communication device of claim 5, wherein the predetermined transmit power threshold is a percentage of a maximum allowed transmit power.

7. The communication device of any one of claims 2 to 6, wherein the determiner is configured to decide to select a subscriber identity module based on uplink condition if the path loss of any of the subscriber identity modules is above a predetermined pathloss threshold.

8. The communication device of any one of claims 2 to 7, wherein the determiner is configured to decide whether to select a subscriber identity module based on uplink condition based on whether the communication service has more traffic in uplink than in downlink.

9. The communication device of any one of claims 1 to 8, wherein the communication service is a call to be established.

10. The communication device of any one of claims 1 to 9, wherein the controller is configured to determine whether a subscriber identity module of the plurality of subscriber identity modules already has an ongoing communication connection and to select a subscriber identity module already having an ongoing communication connection if there is any among the plurality of subscriber identity modules.

11. The communication device of any one of claims 1 to 10, wherein the controller is configured to determine whether a subscriber identity module already has an ongoing communication connection by determining whether the subscriber identity module is in a connected state.

12. The communication device of claim 11, wherein the connected state is a network layer connected state.

13. The communication device of any one of claims 1 to 12, wherein the ongoing communication connection is a connection according to a first connectivity type and the communication service is to be established according to a second connectivity type.

14. The communication device of claim 13, wherein
the first connectivity type is circuit-switched and the second connectivity type is packet-switched, or
the second connectivity type is circuit-switched and the first connectivity type is packet-switched.

15. A method for using a communication service comprising:
selecting a subscriber identity module of a plurality of subscriber identity modules for a communication service based on at least one of
whether one or more of the subscriber identities modules have an ongoing communication connection, and
a result of a decision whether to select a subscriber identity module based on an uplink condition, and the uplink condition or a downlink condition depending on the result of the decision;
controlling a transceiver to use the communication service by means of the selected subscriber identity module.
